# EUROPÄISCHE PATENTSCHRIFT

(11) **EP 0 539 835 B1**
(45) Veröffentlichungstag und Bekanntmachung des Hinweises auf die Patenterteilung: **12.02.1997**
(21) Anmeldenummer: 92117868.7
(22) Anmeldetag: 20.10.1992
(51) Int. Cl.: B01D 71/68, B01D 71/52, B01D 67/00, A61M 1/16

(54) **Asymmetrische, semipermeable Membranen aus aromatischen Polykondensaten und verfahren zu ihrer Herstellung**
Asymmetric semi-permeable membranes from aromatic polycondensators and process for manufacturing thereof
Membranes asymétriques, semi-perméables en polycondensats aromatiques et leur procédé de fabrication

(30) Priorität: 31.10.1991 DE 4135847
(43) Veröffentlichungstag der Anmeldung: 05.05.1993
(73) Patentinhaber: BAYER AG, 51368 Leverkusen (DE)
(72) Erfinder: Hugl, Herbert, Dr., W-5060 Bergisch Gladbach 2 (DE); Dhein, Rolf, Dr., W-4150 Krefeld (DE); Dujardin, Ralf, Dr., W-4156 Willich 2 (DE); Hildenbrand, Karlheinz, Dr., W-4150 Krefeld (DE); Reuter, Knud, Dr., W-4150 Krefeld (DE)

(56) Entgegenhaltungen:
- EP-A- 0 135 941
- EP-A- 0 294 737
- EP-A- 0 362 603
- EP-A- 0 364 741
- EP-A- 0 407 684
- DE-A- 2 228 537
- ULLMANNS ENZYKLOPÄDIE DER TECHNISCHEN CHEMIE Bd. 16, 1978, Seite 517
- DESALINATION Bd. 71, Nr. 2, Februar 1989, AMSTERDAM, NL Seiten 83 - 95 KATARZYNA MAJEWSKA 'Synthesis and Properties of Polysulfone Membranes'
- DESALINATION Bd. 70, Nr. 1-3, November 1988, AMSTERDAM, NL Seiten 265 - 275 S. MUNARI ET. AL. 'Preparation and characterization of polysulfone-polyvinylpyrrolidone based membranes'

## Beschreibung

Die Erfindung betrifft permselektive, asymmetrische Membranen zur Hämodialyse, Hämodiafiltration und Hämofiltration auf der Basis thermo- und verseifungsstabiler aromatischer Polykondensate. Die Erfindung bezieht sich auch auf die Herstellung solcher Membranen.

Hämodialyse, Hämodiafiltration und Hämofiltration sind bekannte Verfahren zur Entgiftung des Blutes (Blutwäsche), d.h. zur Entfernung von selbst in geringer Konzentration vorhandenen toxischen Metaboliten und überschüssigem Wasser. Bei diesen Verfahren wird das Blut aus der Arterie des Patienten durch eine künstliche Niere geleitet, in der das Blut an einer semipermeablen Membran entlangfließt. Auf der anderen Seite der Membran befindet sich eine entsprechend zusammengesetzte Spülflüssigkeit, in die die Giftstoffe durch die semipermeable Membran hineinwandern. Das gereinigte Blut wird dem Körper des Patienten wieder zugeführt.

Bei der Hämodialyse vollzieht sich der Transport über einen Lösungsvorgang in der Membran, dem sich ein Diffusionsschritt anschließt, während eine Hämofiltrationsmembran eine Porenmembran ist, deren Porendurchmesser die Molekulargewichtsausschlußgrenze bestimmt. Bei der Hämodiafiltration vollzieht sich der Transport, wie der Name dieses Vorgangs sagt, nach beiden genannten Prinzipien, also sowohl der Trennung über Lösungs-Diffusions-Mechanismen als auch über den Membranporendurchmesser.

Für diese Verfahren sind eine ganze Reihe von Polymeren vorgeschlagen worden, beispielsweise Celluloseacetat (NTIS Report PB 225 069), Polyacrylnitril (DE-AS 2 145 183), Polysulfon (DE-AS 2 228 537), aromatisches Polyamid oder Polyimid (DE-AS 2 342 072), Diisocyanat-Additionspolymere (DE-PS 3 341 847) und Polyamid-Mischungen (EP 305 787). Die in den genannten Veröffentlichungen beschriebenen Membranen haben alle infolge ihres chemischen Aufbaus und ihrer architektonischen Struktur spezifische Nachteile, wie mangelnde Festigkeit, mangelnde Hämokompatibilität, zu hohe bzw. zu niedrige Wasseraufnahme, mangelnde thermische Beständigkeit (wichtig bei der Sterilisation mit Heißdampf), wasserlösliche bzw. blutlösliche, schädliche Additive, mangelnde Fehlstellenfreiheit, wie Stippen, Gelkörper u. ä., die nach der Fällung Löcher in der Membran hervorrufen, mangelnde chemische Beständigkeit bzw. die unerwünschte Notwendigkeit, daß zur Erreichung von akzeptablen dialytischen Permeabilitäten mit hydrophilen Polymeren verschnitten/legiert werden muß.

Membranen zum Einsatz für die Blutwäsche, die aus Polysulfon ohne Beteiligung weiterer Polymer-Strukturelemente aufgebaut sind, werden in EP 294 737 beschrieben.

Hieraus resultiert die grundlegende Forderung, für die Blutwäsche neue Membranen zu einwickeln, die dem Patienten den größtmöglichen Komfort bei geringstem Risiko und geringster Belastung während der Behandlung bieten.

Es wurde nun gefunden, daß sich aus aromatischen Polykondensaten nach Phaseninversionsverfahren (vgl. R. E. Kesting "Synthetic Polymeric Membranes", 2nd Edition, 1985, S 237 ff.) Membranen herstellen lassen, deren Leistungsdaten sie für eine Anwendung bei Blutreinigungsverfahren in hohem Maße geeignet machen.

Die Erfindung betrifft demnach asymmetrische semipermeable Membranen zur Hämodialyse, Hämodiafiltration und Hämofiltration mit einer Ultrafiltrationsrate von 0,5-1000 ml pro Stunde, pro m² und pro mbar Differenzdruck und einer dialytischen Permeabilität für Chlorid von 1-20x10⁻⁴ cm pro Sekunde aus aromatischen Polykondensaten mit wiederkehrenden Einheiten der Formel

(-O - Z - O - Y -)ₙ (I),

worin
- n: Zahlenwerte von 10 bis 500, bevorzugt von 25 bis 100 annimmt.
- Y: der zweibindige Rest eines aromatischen Sulfons oder eines aromatischen Ketons der Formeln

-Ar-SO₂-Ar'- (II)

bzw.

-Ar-CO-Ar'- (III)

ist, in denen
- -Ar- und -Ar'-: unabhängig voneinander difunktionelle aromatische Reste mit 6 bis 50 C-Atomen sind, und

-O - Z - O - (IV)

ein zweibindiger Diphenolatrest ist,
wobei unter den Diphenolatresten -O-Z-O-0,1 Mol% bis 100 Mol%, vorzugsweise 3 Mol% bis 100 Mol% und insbesondere 10 Mol% bis 100 Mol% aller Diphenolatreste solche der Formel 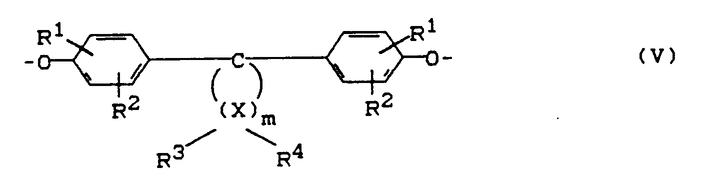
sind, in der
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, oder C₇-C₁₂-Aralkyl, bevorzugt Phenyl-C₁-C₄-Alkyl, insbesondere Benzyl und Cumyl bedeuten,
- m: eine ganze Zahl von 4 bis 7, bevorzugt 4 oder 5 darstellt,
- R³ und R⁴: unabhängig voneinander Wasserstoff oder C₁-C₆-Alkyl darstellen und
- X: Kohlenstoff bedeutet,
wobei
R³ und R⁴ für jedes X verschieden sein können und wobei an mindestens einem X die Substituenten R³ und R⁴ gleichzeitig Alkyl darstellen.

Bevorzugt sind an 1 - 2 Atomen X, insbesondere nur an einem Atom X, R³ und R⁴ gleichzeitig Alkyl. Bevorzugter Alkylrest ist Methyl; die X-Atome in α-Stellung zu dem di-phenyl-substituierten C-Atom (C1) sind bevorzugt nicht dialkyl-substituiert, dagegen ist die Alkyl-di-substitution in β-Stellung zu C1 bevorzugt.

Besonders bevorzugt als Ausgangsmaterial sind Dihydroxydiphenylcycloalkane mit 5 oder 6 Ring-C-Atomen im cycloaliphatischen Rest (m = 4 oder 5 in Formel (V)), wie beispielsweise die Diphenole der Formeln 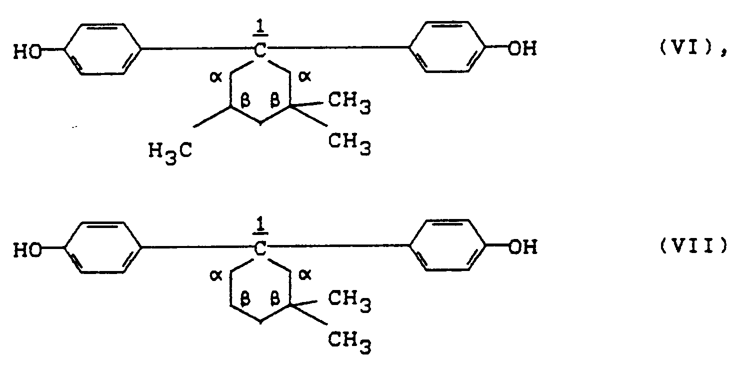 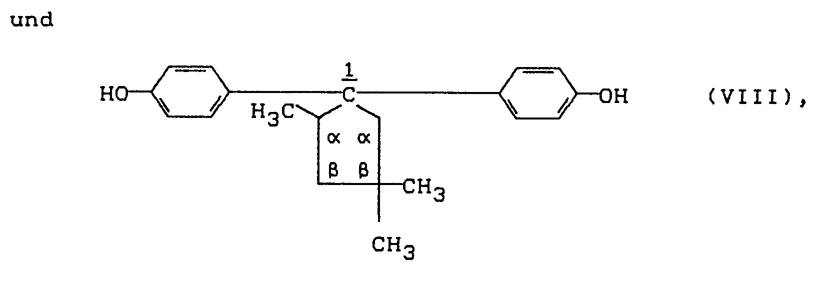 wobei das 1,1-Bis-(4-hydroxyphenyl)-3,3,5-trimethylcyclohexan (Formel VI) besonders bevorzugt ist.

Die aromatischen Polykondensate der Formel (I) sind aus DOS 3 833 385 und DOS 3 833 386 bekannt. Bekannt sind auch Folien aus diesen aromatischen Polykondensaten. Sie sind in DOS 3 836 162 sowie DOS 3 836 169 beschrieben. Diese Folien, die insbesondere nach Extrusionsverfahren hergestellt werden, können auch als asymmetrische Membranen für die Gastrennung, nicht jedoch für Verfahren, wie Hämodialyse, Hämodiafiltration oder Hämofiltration verwendet werden. Die erfindungsgemäßen Membranen haben ebenfalls einen asymmetrischen Aufbau und in bevorzugter Weise eine mikroporöse Struktur.

Zur Herstellung der erfindungsgemäßen Membranen nach dem Phaseninversionsverfahren werden die aromatischen Polykondensate der Formel (I) in aprotischen, polaren Lösungsmitteln, vorzugsweise NMP (N-Methyl-pyrrolidon), DMF (Dimethyl-formamid), DMAc (Dimethyl-acetamid) oder DMSO (Dimethyl-sulfoxid) zu einer Gießlösung gelöst.

Hierbei kann gemäß Stand der Technik unter Zusatz von Lösungsvermittlern, wie Lithiumchlorid, Calciumchlorid usw. oder unter Zusatz von geeigneten Porenbildnern gearbeitet werden (R. E. Kesting, loc. cit.). Bei diesen Verfahrensweisen wird der Gehalt der Gießlösung auf 5 - 30 Gew.% Polymer eingestellt: die Viskosität solcher Gießlösungen beträgt 2.000 - 25.000 mPas (Centipoise) (gemessen mit einem Brookfield-Viskosimeter).

Eine solche Gießlösung in einem aprotischen, polaren Lösungsmittel, bevorzugt von der beispielhaft genannten Art, wird auf eine ebenmäßige Unterlage zu einem Film ausgebreitet oder wird zu Hohlfäden, Schläuchen oder Kapillaren verarbeitet. Auf den Film oder den Hohlfaden, Schlauch oder die Kapillare läßt man sodann im Sinne des Phaseninversionsverfahrens ein Hilfslösungsmittel (Fällungsmittel) einwirken, das mit dem aprotischen, polaren Lösungsmittel mischbar ist, aber kein Lösungsmittel für das Polykondensat darstellt. Dieses Hilfslösungsmittel entzieht dem Film, dem Hohlfaden, Schlauch oder der Kapillare das aprotische polare Lösungsmittel und fällt somit das Polymer in Form der erfindungsgemäßen Membran aus.

Ein solches Hilfslösungsmittel (Fällungsmittel) kann beispielsweise Wasser oder ein niederer Alkohol sein. Zur restlosen Entfernung des aprotischen, polaren Lösungsmittels können mich weitere Waschschritte anschließen. Danach kann, sofern es die vorgesehene Verwendung erforderlich macht, die gebildete Membran nach bekannten Verfahren durch Trocknung vom Hilfslösungsmittel (Fällungsmittel) bzw. von der Waschflüssigkeit befreit werden. Vor dieser Trocknung ist es vorteilhaft, die Membran mit einem Weichmacher, beispielsweise mit Glycerin, zu behandeln.

Die Verteilung der Gießlösung aus dem aromatischen Polykondensat der Formel (I) auf einer ebenmäßigen Unterlage zu einem Film ist beispielsweise durch die bekannte Gießtechnik zur Herstellung von Filmen und Folien möglich. Hohlfäden, Schläuche oder Kapillaren lassen sich beispielsweise durch einen zweckmäßig ausgebildeten formgebenden Ringspalt bzw. eine Hohlnadel ausbilden und vorzugsweise direkt in das Hilfslösungsmittel (Fällungsmittel) einspinnen. In beiden Fällen, nämlich bei der Filmbildung oder bei der Bildung von Hohlfäden, Schläuchen oder Kapillaren können die Versuchsbedingungen so gewählt werden, daß das Hilfslösungsmittel (Fällungsmittel) von einer oder von beiden Oberflächenseiten an die Membran herantreten kann.

Hierbei bildet sich in entsprechender Weise auf einer oder auf beiden Seiten eine dichte Haut auf der (den) Oberfläche(n) der Membran.

Die asymmetrische Struktur, die ein wichtiges Merkmal der erfindungsgemäßen Membran ist, wird hierbei während der Fällung in einer dem Fachmann bekannten Weise erreicht.

Es ist vorteilhaft, daß die Ultrafiltrationsraten und die dialytischen Permeabilitäten sich durch die Variation von Parametern bei der Herstellung der erfindungsgemäßen Membranen dem gewünschten Niveau anpassen lassen. Diese zu variierenden Parameter sind beispielsweise die Konzentration des Polymers in der Gießlösung, die Wahl des Lösungsmittels, die durch die Gießtechnik erzielte Membranschichtdicke und die Abfolge der Entfernung des aprotischen, polaren Lösungsmittels, wobei auch ein Teil des aprotischen, polaren Lösungsmittels vor der Entfernung mit Hilfe des Hilfslösungsmittels abgedampft werden kann.

Dementsprechend weisen erfindungsgemäße Membranen je nach Wahl der Herstellungsparameter eine Ultrafiltrationsrate von 0,5 - 1000 ml pro Stunde, pro m² und pro mbar Differenzdruck und eine dialytische Permeabilität für Chlorid von 1 bis 20 x 10⁻⁴ cm pro Sekunde auf.

Für die Blutreinigung haben die neuen Membranen aus aromatischen Polykondensaten der Formel (I) gegenüber bisher verwendeten Membranen aus handelsüblichen Polysulfonen nicht nur den Vorteil deutlich verbesserter Temperaturstabilität (Sterilisierbarkeit), sondern in überraschender Weise auch denjenigen einer wesentlich verbesserten diffusiven Permeabilität. Dadurch werden mehr Schadstoffe pro Zeiteinheit aus dem Blut abgetrennt, was einen wesentlichen Therapievorteil bedeutet.

Asymmetrische Membranen werden vorzugsweise nach einem von Loeb und Souriajan [Adv. Chem. Ser. 117(1963)] entwickelten, als Phaseninversion bezeichneten Verfahren hergestellt. Dabei wird im allgemeinen ein Polymer in einem geeigneten organischen Lösungsmittel gelöst und zu einem Film gegossen, der in einem Nicht-Lösungsmittel gefällt wird.

Erfindungsgemäß gelingt es, asymmetrische Membranen zur Hämodialyse, Hämodiafiltration und Hämofiltration bereitzustellen, die sich besonders durch hohe Durchflußraten bei guter Trennleistung auszeichnen, einer hohen Druckbelastung im Dauerbetrieb widerstehen und beim Trocknen nicht schrumpfen. Daneben gelingt es auch, temperaturbeständige Membranen bereitzustellen, die ihre guten Eigenschaften auch nach mehrtägigem Behandeln mit kochendem Wasser beibehalten.

Nach dem Verdampfen von ca. 1 - 30 Gew.-% des Lösungsmittels bei Temperaturen zwischen 40 und 100°C in bevorzugter Weise wird die Membran in Wasser oder ein anderes Hilfslösungsmittel gefällt und anschließend in üblicher Weise, z.B. im Glycerinbad, konserviert und getrocknet. Die Membranen können in üblicher Weise durch Wahl der Abdampfrate in der Trennwirkung beeinflußt werden.

### Beispiele

Die Ultrafiltrationsrate der Membranen wird bestimmt durch Messung des Flüssigkeitsvolumens, das bei gegebener Druckdifferenz bei einer Temperatur von 37°C durch eine bei gegebener Apparatur festgelegte Membranfläche durch die Membran tritt und das zur allgemeinen Vergleichbarkeit auf Flächeneinheit, Zeiteinheit und Druckeinheit normiert wird. Als Flüssigkeit zur Bestimmung der Ultrafiltrationsrate wird Wasser verwendet. Die Methode ist u.a. beschrieben in "Evaluation of Hemodialyzers and Dialysis Membranes" des U.S. Department of Health, Education and Welfare, DHEW Publication No (NIH) 77-1294, S. 24 - 26.

Als Testsubstanz für die Urämiegifte dient Natriumchlorid. Gemessen wird die diffuse, drucklose Konzentrationsänderung zweier unterschiedlich konzentrierter Ausgangslösungen zu beiden Seiten der Membran mit der Zeit mittels einer Kaufmann-Leonhard-Zelle. Die Cl^{⊖}-Konzentration in beiden Zellen kann leicht über Leitfähigkeitsmessungen ermittelt werden.

### Beispiel 1

In 80 g NMP wurden durch 4 h langes Rühren bei 70°C 20 g eines aromatischen Polykondensates der Formel 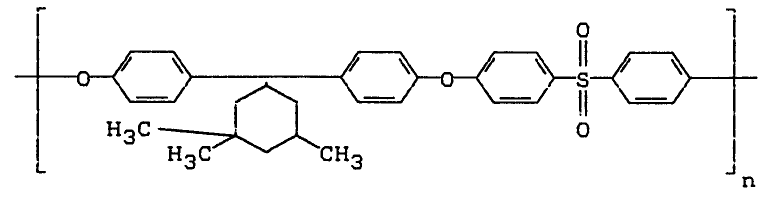 gelöst. Die rel. Viskosität des Polymers betrug 1,207, gemessen an einer 0,5 %igen Lösung in CH₂Cl₂ bei 20°C.

Die Gießlösung ließ man auf 25°C erkalten, filtrierte über eine Seitz-Filterschicht Supra 100® und entgaste anschließend.

Die Gießlösung wurde mittels eines Rakels auf einer Glasplatte zu einem Film von 60 µm Dicke verzogen. Anschließend wurde die beschichtete Glasplatte senkrecht in ein Fällbad einer Temperatur von 25°C mit H₂O als Fällmittel langsam hineingestellt. Nach ca. 15 min löste sich die Membran von dem Glas ab. Sie wurde anschließend bezüglich Ultrafiltrationsrate und dialytischer Permeabilität untersucht.

Die Resultate lauten:

| | |
|---|---|
| UF-Wert [ml/h x m² x 133,3 Pa] ([ml/h x m² x mm Hg]) | 191,1 |
| Cl^{⊖}-Permeabilität [cm/s 10⁻⁴] | 7,91 |

### Beispiel 2

In 150 g NMP wurden durch 4 h langes Rühren bei 70°C 41,5 g des aromtischen Polykondensates von Beispiel 1 sowie 5 g Polyvinylpyrrolidon K 90, M_{w} 360 000, gelöst. Die Gießlösung ließ man auf 25°C erkalten und filtrierte: über eine Seitz-Filterschicht Supra 100® und entgaste danach.

Diese Gießlösung wurde mittels eines Rakels auf einer Glasplatte zu einem Film von 85 µm Dicke verzogen. Anschließend wurde die beschichtete Glasplatte senkrecht in ein Fällbad einer Temperatur von 25°C mit H₂O als Fällmittel langsam hineingestellt. Nach 15 min löste man die Membran vom Glas ab. Sie wurde anschließend hinsichtlich Ultrafiltrationsrate und dialytischer Permeabilität untersucht.

Die Resultate lauten:

| | |
|---|---|
| UF-Wert [ml/h x m² x 133,3 Pa] ([ml/h x m² x mm Hg]) | 31,8 |
| Cl^{⊖}-Permeabilität [cm/s 10⁻⁴] | 3,9 |

### Beispiel 3

In 86 g NMP wurden bei 70°C 14 g eines aromatischen Polykondensates der Formel 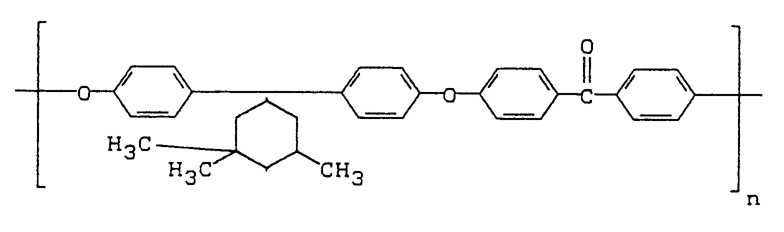 gelöst. Die rel. Viskosität des Polymers betrug 1,397, gemessen an einer 0,5 %igen Lösung in CH₂Cl₂.

Die Gießlösung ließ man auf 25°C erkalten und filtriert über eine Seitz-Filterschicht Supra 100® und entgaste danach.

Diese Gießlösung wurde mittels eines Rakels auf einer Glasplatte zu einem Film von 60 µm Dicke verzogen. Anschließend wurde die beschichtete Glasplatte senkrecht in ein Fällbad einer Temperatur von 25°C mit H₂O als Fällmittel langsam hineingestellt. Nach 15 min löste sich die Membran vom Glas ab. Sie wurde bezüglich Ultrafiltrationsrate und dialytischer Permeabilität untersucht.

| | |
|---|---|
| UF-Wert [ml/h x m² x 133,3 Pa] ([ml/h x m² x mm Hg]) | 130,2 |
| Cl^{⊖}-Permeabilität [cm/s 10⁻⁴] | 8,05 |

## Patentansprüche

1. Asymmetrische, semipermeable Membranen zur Hämodialyse, Hämodiafiltration und Hämofiltration mit einer Ultrafiltrationsrate von 0,5-1000 ml pro Stunde, pro m² und pro mbar Differenzdruck und einer dialytischen Permeabilität für Chlorid von 1-20x10⁻⁴ cm pro Sekunde aus aromatischen Polykondensaten mit wiederkehrenden Einheiten der Formel
(- O - Z -O - Y -)ₙ (I),
in der
n Zahlenwerte von 10 bis 500 annimmt,
Y der zweibindige Rest eines aromatischen Sulfons oder eines aromatischen Ketons der Formeln
-Ar-SO₂-Ar' - (II)
bzw.
-Ar-CO-Ar' (III)
ist, in denen
-Ar- und -Ar'- unabhängig voneinander difunktionelle aromatische Reste mit 6 - 50 C-Atomen sind, und
- O - Z - O - (IV) (IV)
ein zweibindiger Diphenolatrest ist,
wobei unter den Diphenolatresten - O - Z - O-0,1 - 100 Mol-% aller Diphenolatreste solche der Formel 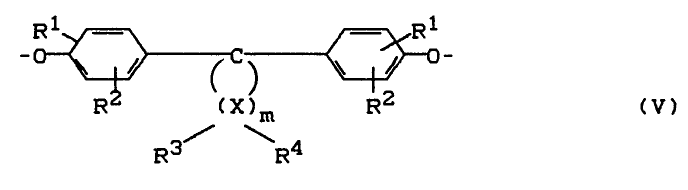
sind, in der
R¹ und R² unabhängig voneinander Wasserstoff, Halogen, C₁-C₈-Alkyl, C₅-C₆-Cycloalkyl, C₆-C₁₀-Aryl oder C₇-C₁₂-Aralkyl bedeuten,
m eine ganze Zahl von 4 bis 7 darstellt,
R³ und R⁴ unabhängig voneinander Wasserstoff oder C₁-C₆-Alkyl darstellen und
X Kohlenstoff bedeutet,
wobei
R³ und R⁴ für jedes X verschieden sein können
und wobei an mindestens einem X die Substituenten R³ und R⁴ gleichzeitig Alkyl darstellen.

2. Membranen nach Anspruch 1, dadurch gekennzeichnet, daß Diphenolatreste (V) in einer Menge von 3 - 100 Mol-% aller Diphenolatreste vorliegen.

3. Membranen nach Anspruch 2, dadurch gekennzeichnet, daß Diphenolatrest (V) in einer Menge von 10 - 100 Mol-% aller Diphenolatreste vorliegen.

4. Membranen nach Anspruch 1, dadurch gekennzeichnet, daß die Diphenolatreste (V) von einem oder mehreren der Diphenole der Formeln 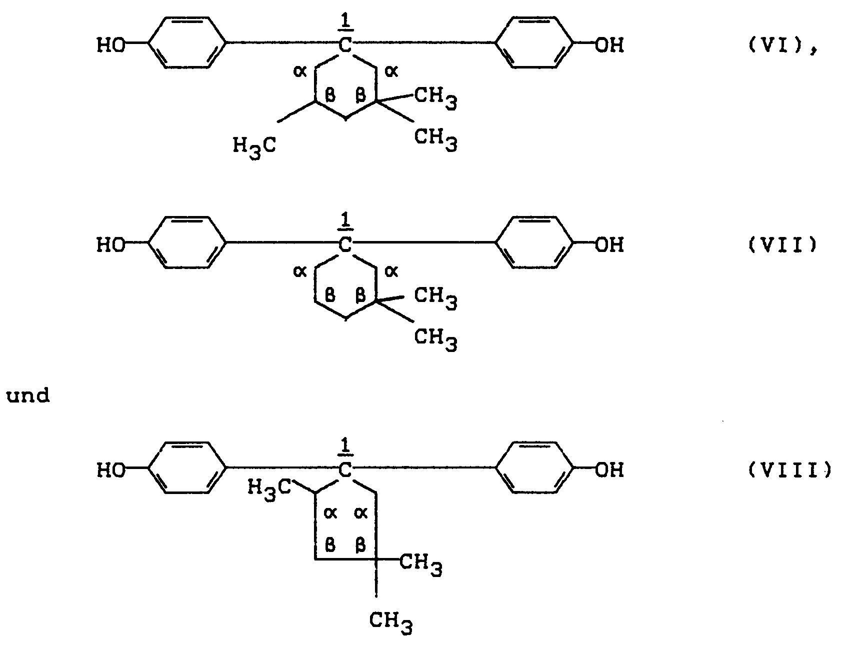 stammen.

5. Verfahren zur Herstellung von Membranen gemäß Anspruch 1, dadurch gekennzeichnet, daß die aromatischen Polykondensate in aprotischen, polaren Lösungsmitteln in einer Menge von 5 - 30 Gew.-%, bezogen auf die Gesamtlösung, gelöst werden, wobei Lösungsvermittler und/oder Porenbildner zugesetzt werden können, die erhaltene Lösung zu Formkörpern, wie Filmen, Schläuchen, Hohlfäden oder Kapillaren verarbeitet wird und die erhaltenen Formkörper mit einem Hilfslösungsmittel behandelt werden, das mit dem Lösungsmittel mischbar ist, aber das Polykondensat nicht löst.

## Claims

1. Asymmetric, semipermeable membranes for haemodialysis, haemodiafiltration and haemofiltration, with an ultrafiltration rate of 0.5-1000 ml per hour, per m² and per mbar pressure difference and with a dialytic permeability to chloride of 1-20 × 10⁻⁴ cm per second, consisting of aromatic polycondensates having recurring units of the formula
(-O-Z-O-Y-)ₙ (I)
in which
n assumes numerical values from 10 to 500,
Y is the divalent radical of an aromatic sulphone or of an aromatic ketone of the formula
-Ar-SO₂-Ar'- (II)
or
-Ar-CO-Ar'- (III)
in which
-Ar- and -Ar'- independently of one another are difunctional aromatic radicals having 6 - 50 C atoms, and
-O-Z-O- (IV)
is a divalent diphenolate radical,
wherein, amongst the diphenolate radicals -O-Z-O-, 0.1 - 100 mol % of all the diphenolate radicals are those of the formula 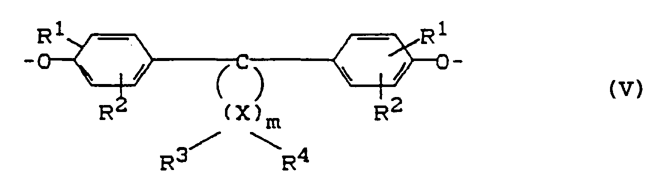 in which
R¹ and R² independently of one another denote hydrogen, halogen, C₁-C₈-alkyl, C₅-C₆-cycloalkyl, C₆-C₁₀-aryl or C₇-C₁₂-aralkyl,
m represents an integer from 4 to 7,
R³ and R⁴ independently of one another represent hydrogen or C₁-C₆-alkyl and
X denotes carbon,
wherein
R³ and R⁴ can differ for each X,
and on at least one X, the substituents R³ and R⁴ simultaneously represent alkyl.

2. Membranes according to Claim 1, characterised in that the diphenolate radicals (V) are present in an amount of 3 - 100 mol % of all the diphenolate radicals.

3. Membranes according to Claim 2, characterised in that the diphenolate radical (V) is present in an amount of 10 - 100 mol % of all the diphenolate radicals.

4. Membranes according to Claim 1, characterised in that the diphenolate radicals (V) originate from one or more of the diphenols of the formulae

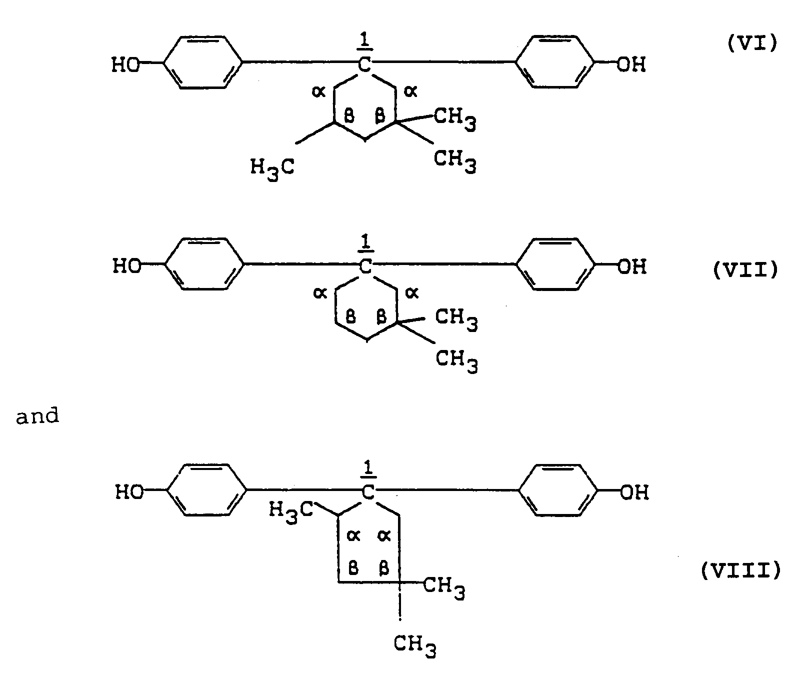

5. Process for the preparation of membranes according to Claim 1, characterised in that the aromatic polycondensates are dissolved in aprotic, polar solvents in an amount of 5 - 30 % by weight, based on the total solution, it being possible to add solubilising agents and/or pore-forming agents, the resulting solution is processed to shaped articles, such as films, tubes, hollow filaments or capillaries, and the resulting shaped articles are treated with an auxiliary solvent which is miscible with the solvent but does not dissolve the polycondensate.

## Revendications

1. Membranes semi-perméables asymétriques pour l'hémodialyse, l'hémodiafiltration et l'hémofiltration possédant un débit d'ultrafiltration de 0,5-1000 ml par heure, par m² et par mbar de pression différentielle, ainsi qu'une perméabilité dialytique pour le chlorure de 1-20x10⁻⁴ cm par seconde, constituées par des polycondensats aromatiques contenant des unités récurrentes de formule
(- O - Z - O - Y -)ₙ (I),
dans laquelle
n prend des valeurs numériques de 10 à 500,
Y représente le radical à double liaison d'une sulfone aromatique ou d'une cétone aromatique répondant aux formules
-Ar-SO₂-Ar'- (II)
respectivement
-Ar-CO-Ar' (III)
dans lesquelles
-Ar- et -Ar'- représentent, indépendamment l'un de l'autre, des radicaux aromatiques difonctionnels contenant de 6 à 50 atomes de carbone, et
- O - Z - O - (IV)
représente un radical diphénolate à double liaison,
dans lequel, parmi les radicaux diphénolate - O - Z - O - de 0,1 à 100 moles % de tous les radicaux diphénolate représentent ceux répondant à la formule 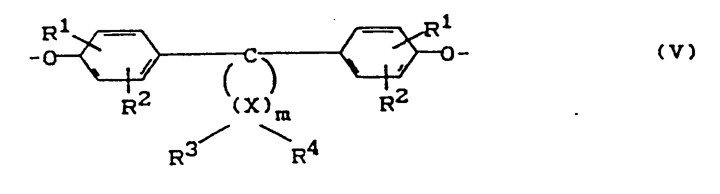 dans laquelle
R¹ et R² représentent, indépendamment l'un de l'autre, un atome d'hydrogène, un atome d'halogène, un groupe alkyle en C₁-C₈, un groupe cycloalkyle en C₅-C₆, un groupe aryle en C₆-C₁₀ ou un groupe aralkyle en C₇-C₁₂,
m représente un nombre entier de 4 à 7,
R³ et R⁴ représentent, indépendamment l'un de l'autre, un atome d'hydrogène ou un groupe alkyle en C₁-C₆,
X représente un atome de carbone,
où
R³ et R⁴ peuvent être différents pour chaque X,
et dans laquelle, sur au moins un X, les substituants R³ et R⁴ représentent simultanément un groupe alkyle.

2. Membranes selon la revendication 1, caractérisées en ce que les radicaux diphénolate (V) sont présents en une quantité de 3 - 100 moles % de tous les radicaux diphénolate.

3. Membranes selon la revendication 2, caractérisées en ce que le radical diphénolate (V) est présent en une quantité de 10 - 100 moles % de tous les radicaux diphénolate.

4. Membranes selon la revendication 1, caractérisées en ce que les radicaux diphénolate (V) dérivent d'un ou de plusieurs des diphénols répondant aux formules

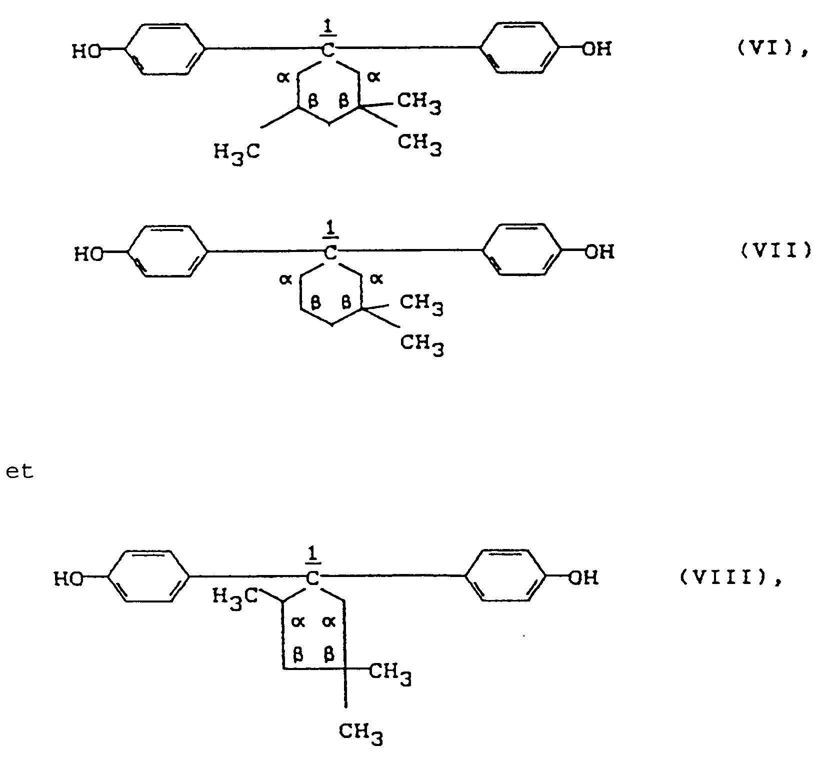

5. Procédé pour la préparation de membranes selon la revendication 1, caractérisé en ce qu'on dissout les polycondensats aromatiques dans des solvants polaires aprotiques en une quantité de 5 - 30% en poids rapportés à la solution totale, solution à laquelle on peut ajouter des agents de solubilisation et/ou des formateurs de pores, on transforme la solution obtenue en corps moulés tels que des films, des tuyaux flexibles, des fils creux ou des capillaires, et on traite les corps moulés obtenus avec un solvant auxiliaire qui est miscible au solvant, mais qui ne dissout pas le polycondensat.
